# EUROPÄISCHE PATENTSCHRIFT

(11) **EP 0 456 845 B1**
(45) Veröffentlichungstag und Bekanntmachung des Hinweises auf die Patenterteilung: **23.03.1994**
(21) Anmeldenummer: 90108996.1
(22) Anmeldetag: 12.05.1990
(51) Int. Cl.: B23B 5/32, B23Q 15/013

(54) **Verfahren zum Profilieren oder Reprofilieren von Eisenbahnrädern durch zerspanende Bearbeitung**
Method for profiling or reprofiling of railway wheels by machining
Méthode pour profiler ou reprofiler les roues de chemin de fer par enlèvement de copeaux

(43) Veröffentlichungstag der Anmeldung: 21.11.1991
(73) Patentinhaber: Wilhelm Hegenscheidt Gesellschaft mbH, D-41804 Erkelenz (DE)
(72) Erfinder: Schneider, Friedhelm, Dr.-Ing., D-5144 Wegberg (DE); Feldewert, Herbert, Dipl.-Ing., D-5140 Erkelenz (DE)
(74) Vertreter: Mayer-Pohske, Joachim-Wolfgang Rechtsanwälte Dr. Dettmeier & Partner

(56) Entgegenhaltungen:
- EP-A- 0 252 164
- DE-B- 1 427 003
- FR-A- 1 549 617
- GB-A- 1 229 635
- US-A- 4 285 235
- RAILWAY GAZETTE INTERNATIONAL. vol. 130, no. 2, Februar 1974, LONDON GB Seiten69 - 71; "Tests prove validity of in-motion wheel-crack detection"
- PATENT ABSTRACTS OF JAPAN vol. 9, no. 57 (M-363)(1780) 13 März 1985,& JP-A-59 191506 (SUMITOMO KINZOKU) 30 Oktober 1984,

## Beschreibung

Die Erfindung betrifft ein Verfahren Zum Profilieren oder Reprofilieren von Eisenbahnrädern durch zerspanende Bearbeitung, wobei zunächst der Radkranz auf Risse geprüft und nachfolgend unter Berücksichtigung der Rißtiefe profiliert oder reprofiliert wird.
Das Profilieren von Eisenbahnrädern erfolgt bei der Herstellung aus den gewalzten Rohkörpern. Eine Untersuchung solcher neu hergestellten Eisenbahnräder auf Risse oder andere Materialfehler wird zur Zeit erst durchgeführt, wenn die Bearbeitung vollständig erledigt ist, wobei man hofft, daß keine Fehler vorhanden sind, so daß der geprüfte Radsatz sofort zum Einsatz kommen kann. Diese Untersuchung erfolgt in besonderen Einrichtungen, die nur für diesen Untersuchungsvorgang und auch nur für lose Räder geeignet sind und mit Ultraschall arbeiten. Falls bei einer solchen Untersuchung Risse gefunden werden, ist es möglich, diese Risse durch eine nochmalige Bearbeitung der Lauffläche zu beseitigen. Auf diese Art und Weise werden Risse beim Profilieren von Eisenbahnrädern berücksichtigt.
Das Reprofilieren von Eisenbahnrädern erfolgt an gelaufenen Rädern, deren Laufprofil nicht mehr den Vorschriften entspricht. Gelaufene Eisenbahnräder können Risse aufweisen, die von der Lauffläche bzw. dem "Radprofil" ausgehen.

Um Risse in gelaufenen Eisenbahnrädern vor dem Reprofilieren zu erkennen und auch um Eisenbahnräder ohne Risse von Eisenbahnrädern mit Rissen zu unterscheiden oder zu trennen, ist es auch bekannt, Eisenbahnräder von ausgebauten Radsätzen in sogenannten Rißprüfanlagen für Radsätze vorzuprüfen (Schienenfahrzeug 4/1978 - Halbautomatische Prüfung der Vollradscheiben mittels Ultraschall). Werden Risse im Radkranz festgestellt, werden diese Radsätze besonders gekennzeichnet und trotzdem bearbeitet. Nach der Bearbeitung werden die gekennzeichneten Radsätze nochmals in der genannten Rißprüfanlage auf Vorhandensein von Rissen untersucht. Werden keine Risse mehr festgestellt, kommen die Radsätze zum Einsatz. Werden jedoch wiederum Risse festgestellt, wird der Radsatz nochmals zur Bearbeitungsmaschine gegeben und ein weiteres Mal mit einer willkürlich festgelegten Spantiefe reprofiliert und nach dieser zweiten Reprofilierung nochmals in der Rißprüfanlage für Radsätze überprüft. Erst wenn keine Risse mehr festgestellt werden, wird der Radsatz für den Einsatz freigegeben. Dies ist eine sehr zeitaufwendige Methode, die zudem unnötig viel teuren Werkstoff zerspant.

Mit einem anderen bekannten Radsatzprüfstand (Schienenfahrzeuge 4/1988 - Automatischer Radsatzrisseprüfstand für Wagenradsätze) werden Radsätze sowohl mit Ultraschallprüfgeräten als auch mit Rißprüfgeräten zur magnetinduktiven Rißprüfung untersucht. Bei einer Ultraschallprüfung ist es lediglich möglich, das Vorhandensein von Rissen festzustellen. Eine Aussage über die Rißtiefe ist nicht möglich. Die magnetinduktive Rißprüfung hingegen ermöglicht auch eine Aussage über die Tiefe von Rissen. Die Kenntnis der Rißtiefen allein verbessert jedoch nicht die oben beschriebene Situation.

In "Schienenfahrzuge 5/1987 - Magnetinduktive Oberflächenrißprüfung an Radsätzen" wird eine magnetinduktive Prüfung mit einer Tastspulenkombination vorgeschlagen, die neben der Rißtiefe auch eine Aussage zur Rißlage machen soll. Der Literaturstelle ist dann nicht mehr zu entnehmen, wie die Rißlage definiert ist.

Nach dem Stand der Technik müssen mit Ultraschall untersuchte Eisenbahnräder bei Befund nochmals geprüft und unter Umständen auch mehrmals bearbeitet werden. Das bedeutet möglicherweise ein mehrmaliges und zeitaufwendiges Hin- und Hertransportieren von Eisenbahnrädern und Radsätzen zwischen einer Prüfeinrichtung und einer Bearbeitungsmaschine. Bei der vorgenannten Prüfung von Eisenbahnrädern mit der Tastspulenkombination können die erhaltenen Daten einem Rechner oder Schreiber zugeleitet werden. Diese Daten müssen aber immer dem richtigen Eisenbahnrad zugeordnet an einer Bearbeitungsmaschine vorliegen. Eine Verwechslung der Bearbeitungsdaten ist nicht auszuschließen, da Daten und Eisenbahnräder voneinander getrennt zur Bearbeitungsmaschine gelangen, so daß Eisenbahnräder mit falschen Schnittiefen reprofiliert werden können, so daß entweder zu viel Radwerkstoff abgespant wird oder daß Risse unerkannt im Radkranz verbleiben. Zudem ist selbst dann, wenn die Rißtiefen bekannt sind, die Lage eines durch Reprofilierung herzustellenden Sollprofils immer noch unbekannt.

Eine Untersuchung von Eisenbahnrädern an im Fahrzeug eingebauten Radsätzen auf Risse ist mit den vorgenannten Rißprüfanlagen für Radsätze nicht möglich.
Mit der DE-PS 32 18 453 ist ein elektromagnetischer Ultraschallwandler zur zerstörungsfreien Prüfung von elektrisch leitenden Werkstoffen bekannt, der, in eine Schiene eingebaut, beim Überrollen eines Eisenbahnrades dieses auf Risse prüft. Ist die Prüfung von Eisenbahnrädern mit diesem in die Schiene eingebauten Ultraschallwandler positiv, muß nach einer Reprofilierung auf einer Unterflurradsatzdrehmaschine das Fahrzeug nochmals das Gleis mit dem Ultraschallwandler befahren, damit nachgeprüft werden kann, ob mit der Reprofilierung auch alle Risse beseitigt sind. Eine Reprofilierung mit anschließender Nachprüfung muß so oft erfolgen, bis die Rißprüfung eine negative Anzeige ergibt. Diese Vorgehensweise ist umständlich und zeitraubend, da das Fahrzeug zwischen Prüfanlage und Bearbeitungsmaschine solange hin- und herpendeln muß, bis alle Räder rißfrei sind.

Der Erfindung liegt somit die Aufgabe zugrunde, Verfahren vorzuschlagen, mit denen die Lage der Kontur eines Sollprofils an einem Eisenbahnrad so bestimmt werden kann, daß darauf ein Reprofilierungswerkzeug zur Herstellung eines rißfreien Profils ausgerichtet werden kann.

Diese Aufgabe ist ausgehend von einer Gattung der eingangs beschriebenen Art erfindungsgemäß dadurch gelöst, daß die axiale Lage von Rissen und der radiale Abstand eines jeden Rißgrundes von einem Bezugsprofil, das der Kontur des Sollprofils entspricht, ermittelt wird, worauf eine Sollprofilkontur rechnerisch radial so verschoben wird, daß sie den Rißgrund tangiert, der bei Abfahren der verlagerten Sollprofilkontur durch ein Reprofilierungswerkzeug ein rißfreies Profil ergibt, worauf das Rad mit mindestens der zur Erreichung der verlagerten Sollprofilkontur notwendigen Spantiefe profiliert oder reprofiliert wird.

Die Betrachtung von einzelnen Rißtiefen bei der Bestimmung von Schnittiefen für ein Bearbeitungswerkzeug kann bei einer Zerspanung kein rißfreies Eisenbahnrad ergeben, da in Abhängigkeit von der axialen Lage von Rissen am Rad selbst Risse mit geringerer Rißtiefe als andere Risse in anderen axialen Lagen, bei einer Schnittiefe, bestimmt nach der größten Rißtiefe, nicht sicher beseitigt werden.

Deshalb ist es erforderlich, daß die radialen Abstände eines jeden Rißgrundes je axialer Lage von einem Bezugsprofil ermittelt werden. Mit den radialen Abständen eines jeden Rißgrundes je axialer Lage von einem Bezugsprofil liegen Abstandsmaße vor, von denen ein Abstandsmaß den größten oder den kleinsten Abstand eines Rißgrundes von einem Bezugsprofil angibt, je nachdem, ob das Bezugsprofil für die Abstandsmessung radial außerhalb oder radial innerhalb des Istprofils angeordnet ist.

Nach einer alternativen Lösung der Erfindung ist vorgesehen, daß die axiale Lage von Rissen und in jeder axialen Lage die größte Rißtiefe ermittelt wird, worauf ein Drehwerkzeug in den genannten axialen Lagen sowie in der Meßkreisebene bis zur Berührung mit der Umfangsfläche des Rades gefahren und diese Positionen des Drehwerkzeuges erfaßt und gespeichert werden, worauf das Tiefenmaß des Rißgrundes, der am nächsten an der Radmitte liegt, in radialer Richtung, korrigiert um den radialen Betrag der Profilneigung zwischen Meßkreisebene und der axialen Lage des Rißgrundes, in die Meßkreisebene projiziert und durch diesen Punkt oder radial tiefer ein zu profilierendes Profil gelegt und profiliert oder reprofiliert wird.

Dieses Verfahren ist besonders geeignet für Maschinen, die keinen Rechner aufweisen oder bei Maschinen mit hydraulischer Kopiersteuerung. Es ist jedoch nicht auf diese Maschine beschränkt. Mit der Berührung der Umfangsfläche des Rades mit einem Drehwerkzeug in den auf Risse untersuchten Ebenen, in denen Risse ermittelt wurden und dem Erfassen und Speichern der Drehwerkzeugpositionen werden mindestens die radialen Ausgangspositionen von Rissen bekannt. Wird dazu die Radumfangsfläche in der Meßkreisebene ebenfalls mit dem Drehwerkzeug berührt und diese Position ebenfalls erfaßt und gespeichert, kann in einfacher Weise festgestellt werden, welcher Riß der Radmitte mit seinem Rißgrund am nächsten kommt. Wird diese Rißtiefe nämlich in die Meßkreisebene projiziert und dazu noch der Betrag der Profilneigung zwischen der Meßkreisebene und der axialen Lage der ausgewählten Rißtiefe hinzugerechnet, erhält man einen Punkt in der Meßkreisebene, den eine Profilkontur tangieren kann, wenn ein rißfreies Sollprofil hergestellt werden soll.

In einer Ausgestaltung der Erfindung wird vorgeschlagen, daß in mindestens einer Lage oder Ebene nach der Berührung mit der Umfangsfläche das Drehwerkzeug radial bis zur Erzeugung einer geschlossenen Umfangsspur gefahren und erst diese Position des Drehwerkzeuges erfaßt und gespeichert wird.
Mit dieser Maßnahme wird erreicht, daß es auch bei stark unrunden Rädern und bei am Umfang des Rades verteilten Rissen möglich ist, eine nach Rißtiefe und Profilneigung ausgerichtete Sollprofilpositionierung zu erreichen.

In einer weiteren Ausgestaltung der Erfindung ist vorgesehen, daß in an sich bekannter Weise jedes Rad in Abhängigkeit vom Ausgangszustand seines Profils profiliert oder reprofiliert und nachfolgend in der Bearbeitungsmaschine auf Risse, die bis zur Lauffläche reichen, geprüft wird, worauf dann, wenn Risse ermittelt werden, der Bearbeitungsvorgang und Prüfvorgang solange wiederholt wird, wie Risse ermittelt werden. Wird ein profiliertes oder reprofiliertes Eisenbahnrad noch in der Bearbeitungsmaschine auf Risse überprüft, wird ein Hin- und Hertransportieren von Rädern oder Radsätzen vermieden. Bei Rädern an eingebauten Radsätzen ist der wirtschaftliche Nutzen noch größer als bei losen Rädern und Radsätzen, da es vermieden wird, ein Fahrzeug eventuell nochmals zwischen Bearbeitungsmaschine und Prüfeinrichtung hin und her zu fahren.

Weiter wird mit der Erfindung vorgeschlagen, daß eine mittels eines parallel und senkrecht zur Drehachse beweglichen Trägers verfahrbare Prüfeinrichtung zur Erfassung der Tiefe eines Risses verwendet wird, wobei die Bewegung des Trägers über Wegmeßmittel erfaßt und wobei deren Daten ebenso wie die Daten der Prüfeinrichtung an eine Datenverarbeitungsanlage weitergegeben werden, die ihrerseits eine Maschinensteuerung beeinflußt. Mit der Verwendung von Prüfeinrichtungen in einer Bearbeitungsmaschine, die eine Überflurradsatzdrehmaschine oder eine Unterflurradsatzdrehmaschine sein kann, ist es möglich, den Prüfvorgang direkt mit dem Bearbeitungsvorgang zu verknüpfen und sogar zu automatisieren.

Durch die an dem Träger für die Prüfeinrichtungen vorgesehenen Antriebsmittel und Wegmeßmittel und dadurch, daß die Wegmeßmittel mit einer Datenverarbeitungsanlage verbunden sind, ist es möglich, die zu prüfenden Ebenen der Eisenbahnräder automatisch nach einem vorgegebenen Programm anzufahren und zu prüfen. Es ist aber auch möglich, die Prüfeinrichtungen manuell gesteuert an die Umfangsflächen von Eisenbahnrädern anzulegen. Dadurch, daß die Prüfeinrichtungen ebenfalls mit der Datenverarbeitungsanlage verbunden sind, ist es möglich, sofort alle relevanten Daten zu erfassen, zu speichern und zu verarbeiten.

Nach einer Ausgestaltung der Erfindung ist vorgesehen, daß als Träger für die Prüfeinrichtungen der Werkzeugträger verwendet wird.
Da Werkzeugträger zum Bewegen eines zugeordneten Werkzeuges parallel und senkrecht zur Drehachse einer Maschine bereits vorhanden sind, können diese auch die Prüfeinrichtungen bewegen. Hierdurch bleibt die Bearbeitungsmaschine von anderen Tragmitteln frei, bleibt übersichtlich und kostengünstig.

In einer anderen Ausgestaltung der Erfindung ist vorgeschlagen, daß zur Prüfung ein in der Prüfeinrichtung gegen eine Vorspannkraft in mindestens radialer Richtung beweglicher Prüfkopf verwendet wird.
Das Anlagen eines Prüfkopfes einer Prüfeinrichtung an eine Radumfangsfläche muß mit einer definierten Anlagekraft erfolgen, damit er sicher anliegt und nicht zerquetscht wird. Diese sichere Anlage wird über die vorgesehene Vorspannkraft und die Beweglichkeit des Prüfkopfes in radialer Richtung erreicht. Mit der Beweglichkeit des Prüfkopfes in radialer Richtung wird zusätzlich erreicht, daß auch bei unrunden Rädern sichergestellt ist, daß der Prüfkopf auch beim Rotieren des Rades über den gesamten Radumfang definiert anliegt.

In einer weiteren Ausgestaltung der Erfindung wird vorgeschlagen, daß eine Berührung einer Kontaktfläche eines Prüfkopfes mit der Umfangsfläche eines Rades erfaßt und an die Datenverarbeitungsanlage weitergeleitet wird und außerdem, daß mindestens eine Radialbewegung des Trägers eines Prüfkopfes abgeschaltet wird, nachdem dieser einen vorbestimmten Weg nach der Berührung der Kontaktfläche des Prüfkopfes mit der Umfangsfläche des Rades durchfahren hat.
Dadurch, daß die Berührung der Radumfangsfläche durch die Kontaktfläche eines Prüfkopfes erfaßt und an die Datenverarbeitungsanlage weitergeleitet wird, ist sichergestellt, daß erkannt wird, wann der Prüfkopf am Eisenbahnrad anliegt. Der Augenblick der Berührung kann auch optisch oder akustisch gemeldet werden, beispielsweise, wenn der Prüfkopf von einem Bediener gesteuert angelegt wird. Mit der Berührung der Radumfangsfläche durch den Prüfkopf soll der Aufbau einer Vorspannkraft zwischen Rad und Prüfkopf beginnen. Durch die Abschaltung der Radialbewegung des Trägers des Prüfkopfes nach Durchlaufen eines vorbestimmten Weges ist sichergestellt, daß eine definierte Vorspannkraft nicht wesentlich überschritten oder unterschritten wird.

Als Mittel zum Erfassen des Zeitpunktes der Berührung von Prüfkopf und Rad kann ein Endschalter aber auch ein Wegaufnehmer verwendet werden. Wird ein Wegaufnehmer verwendet, kann dieser auch gleichzeitig zur Erfassung des vorgegebenen Radialweges des Prüfkopfes benutzt werden. Sobald der Wegaufnehmer den vorgegebenen Radialweg des Prüfkopfes erfaßt hat, wird ein Signal an die Datenverarbeitungsanlage abgegeben. Dieses Signal wird dann zum Stillsetzen der Radialbewegung des Trägers der Prüfeinrichtungen benutzt.

In weiteren Ausgestaltungen der Erfindung wird vorgeschlagen, daß die Rißprüfung nach dem Gleichstrom-Potentialsondenverfahren oder daß die Rißprüfung unter Verwendung eines Wirbelstrom-Tastspulengerätes durchgeführt wird.
Mit diesem Verfahren können zuverlässig vorhandene Risse erkannt und auch die Tiefe der Risse ermittelt werden.

Es ist schließlich nach der Erfindung noch vorgeschlagen, daß für die Prüfung mindestens ein Prüfkopf verwendet wird, der an seinem der Drehachse zugewandten Ende bei einer Anlage an der Umfangsfläche des Rades um eine Schwenkachse schwenkbar ist, die zur Drehachse und zur Mittelachse des Prüfkopfes mindestens angenähert senkrecht verläuft, wobei der Prüfkopf nach der Prüfung abgehoben wird und in seine Ausgangslage zurückschwenkt.
Die Kontaktflächen von Prüfköpfen können sowohl Planflächen als auch ballige Flächen sein. Ein Prüfkopf mit einer balligen Kontaktfläche braucht nur angenähert normal an ein Werkstück angelegt zu werden, um aussagefähige Daten, insbesondere über Rißtiefen, zu liefern.

Auch Rißprüfköpfe, deren Kontaktflächen als Planflächen ausgebildet sind, müssen nicht unbedingt ein Werkstück mit Linienberührung berühren, um Meßwerte zu liefern. Da aber bei Punktberührung die Meßwerte ungenau sein können, ist es vorteilhaft, den Prüfkopf so zu führen, daß er mit seiner Kontaktfläche das Werkstück in Linienberührung berührt. Durch das schwenkbare Aufnehmen des Prüfkopfes wird erreicht, daß der Prüfkopf bei Punktberührung um seine Schwenkachse bewegt wird und am Werkstück in Linienberührung zur Anlage kommt aber nach dem Abheben in seine Ausgangslage zurückkehrt.

Die Erfindung soll nun anhand der in den Zeichnungen dargestellten Beispiele näher erläutert werden.
- Figur 1: zeigt eine Darstellung von Bezugsprofil, Istprofil und Sollprofil,
- Figur 2: zeigt eine Darstellung von Istprofil und Sollprofil,
- Figur 3: zeigt eine Überflurradsatzdrehmaschine in Draufsicht,
- Figur 4: zeigt Schnitt X - X der Überflurradsatzdrehmachine nach Figur 3
- Figur 5: zeigt einen schwenkbar aufgenommenen Prüfkopf.

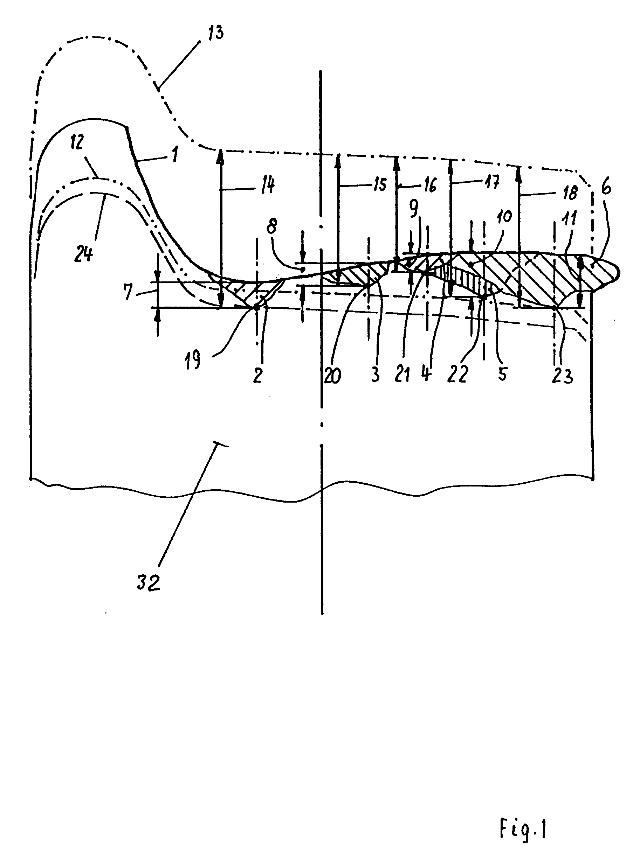

In Figur 1 ist ein Istprofil 1 eines verschlissenen Eisenbahnrades mit den Rissen 2, 3, 4, 5 und 6 dargestellt, welche die unterschiedlichen Rißtiefen 7,8,9,10 und 11 aufweisen. Diese Risse 2,3,4,5 und 6 befinden sich in unterschiedlichen axialen Lagen im Istprofil 1 und sollen die jeweils tiefsten Risse darstellen, die in der jeweiligen Ebene ermittelt wurden. Für die weitere Betrachtung sind diese sonst am Radumfang verteilten Risse als in einer Längsebene liegend dargestellt. Aus Figur 1 ist nun deutlich zu entnehmen, daß die Risse unterschiedliche Tiefen aufweisen. Zur Herstellung eines rißfreien Profils muß ein Reprofilierungswerkzeug auf eine geeignete Sollkonturlage positioniert werden, die in ihrer zunächst noch gedachten radialen Lage die Rißtiefen berücksichtigt. Wird nun beispielsweise die Kontur eines Sollprofils 12 nach der größten Rißtiefe 11 positioniert, ist leicht zu erkennen, daß Risse mit geringerer Tiefe, in dieser Darstellung Riß 2 mit der Rißtiefe 7, beim Reprofilieren nach der Kontur des Sollprofils 12 nicht voll entfernt werden. Um die Kontur eines Sollprofils so legen zu können, daß alle Risse erfaßt werden, ist es notwendig, daß von einem Bezugsprofil 13, welches der Kontur des Sollprofils entspricht, der jeweilige Abstand 14,15,16,17 und 18 des jeweils tiefsten Rißgrundes 19, 20, 21, 22 und 23 ermittelt wird. Wird nun das Bezugsprofil 13, welches in seiner Kontur dem Sollprofil entspricht, um den größten Abstand zwischen Bezugsprofil und Rißgrund, in diesem Falle Abstand 14 zu Rißgrund 19, radial verschoben, tangiert das Bezugsprofil 13 den Rißgrund 19 und alle Risse 2, 3, 4, 5 und 6 befinden sich radial außerhalb der neupositionierten Sollprofilkontur 24. Wird nun die Sollkontur 24 von einem Zerspanungswerkzeug abgefahren, entsteht ein rißfreies Profil.

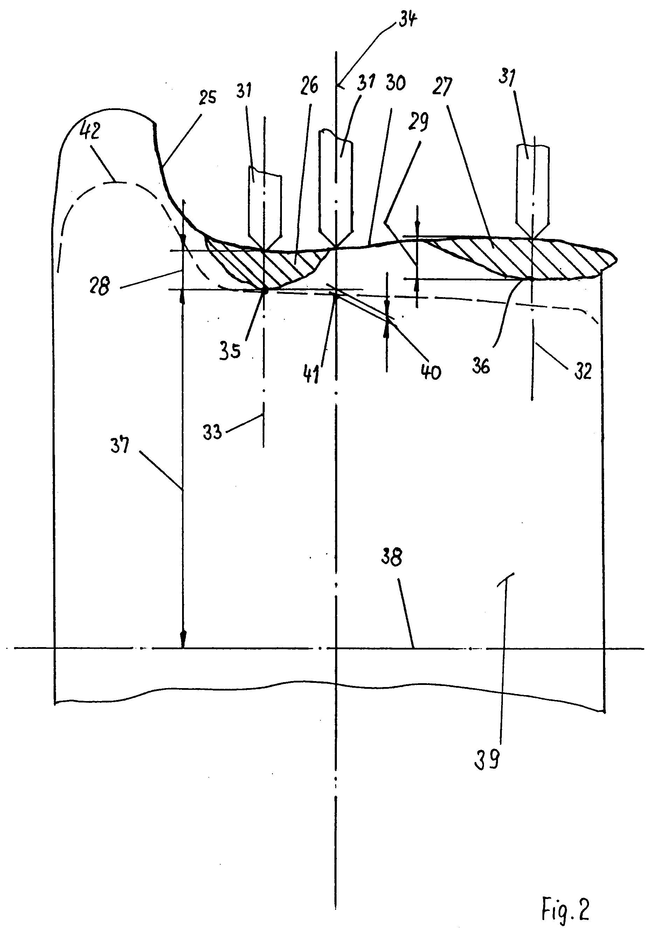

In Figur 2 ist das Istprofil 25 eines verschlissenen Rades 39 mit den Rissen 26 und 27 und den Rißtiefen 28 und 29 dargestellt. Um zu diesem Istprofil 25 unter Berücksichtigung der Risse 6 und 7 mit den Rißtiefen 28 und 29 in einfacher Weise ein zu profilierendes Sollprofil 42 zu positionieren, kann folgendermaßen vorgegangen werden. Die Radumfangsfläche 30 wird mit einem Drehwerkzeug 31 in der axialen Lage 32 des Risses 27 in Berührung gebracht und die axiale Lage sowie die radiale Lage des Drehwerkzeuges 31 wird erfaßt und gespeichert. Daraufhin wird das Drehwerkzeug 31 nochmals mit der Radumfangsfläche 30, jedoch in der axialen Lage 33 des Risses 36 in Berührung gebracht. Wiederum wird die axiale und die radiale Lage des Drehwerkzeugs 31 erfaßt und gespeichert. Nun wird das Drehwerkzeug 31 in der Meßkreisebene 34 ebenfalls mit der Radumfangsfläche 30 in Berührung gebracht und die Lage des Drehwerkzeuges 31 ebenfalls erfaßt und gespeichert. Mit der radialen Lage des Drehwerkzeuges 31 in der Meßkreisebene 34 und mit den axialen Lagen 32 und 33 der Risse 26 und 28 sowie den gemessenen Rißtiefen 28 und 29 kann nun ermittelt werden, welcher Rißgrund 35, 36 der Risse 26, 27 den geringsten Abstand von der Radmitte 38 des Rades 39 aufweist. Im vorliegenden Falle weist der Rißgrund 35 den geringeren Abstand 37 zur Radmitte 38 auf. Wird nun die Rißtiefe 28 auf die Meßkreisebene 34 projiziert und der radiale Betrag 40 der Profilneigung zwischen der Meßkreisebene 34 und der axialen Lage 33 berücksichtigt, ergibt sich der Punkt 41, durch den ein nach den Rißtiefen positioniertes Sollprofil 42 gelegt werden kann, wie dies in Figur 2 dargestellt ist.

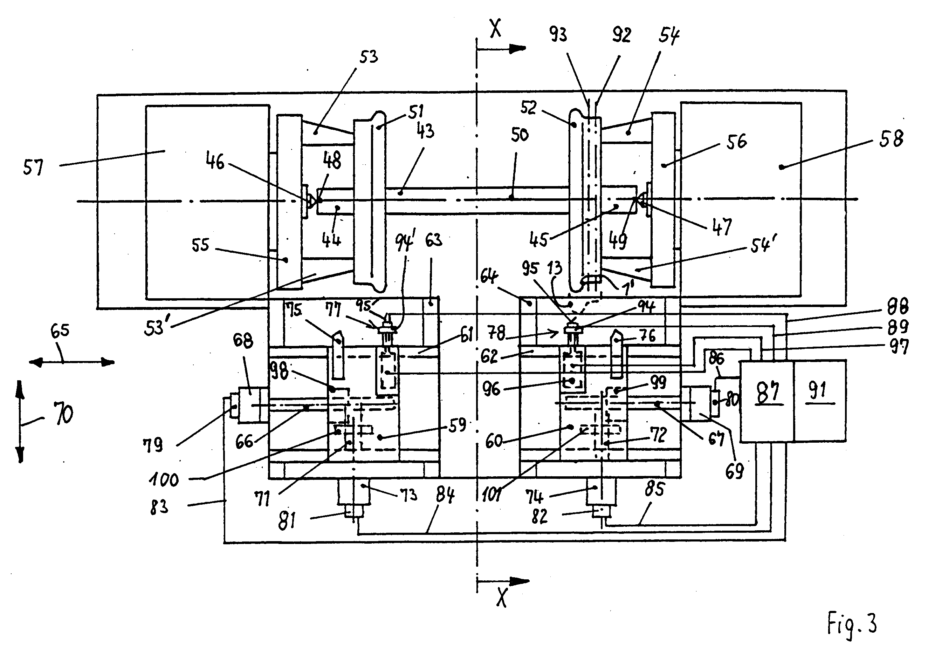

Die Maschine nach Figur 3 ist eine Überflurradsatzdrehmaschine zum Reprofilieren z.B. verschlissener Radprofile an Rädern von Radsätzen. Der Radsatz 43 ist an seinen beiden Wellenschenkeln 44, 45 mit den Körnerspitzen 46, 47 in den Körnerbohrungen 48, 49 aufgenommen und zentriert. Um den Radsatz 43 um seine Rotationsachse 50 antreiben zu können, sind je Rad 51, 52 Mitnehmer 53, 53', 54, 54', die von Planscheiben 55, 56 aufgenommen und in den Planscheiben 55, 56 auch radial verschiebbar sind, vorgesehen. Die Spindelstücke 57, 58 weisen je eine nicht weiter dargestellte Lagerung für die Planscheiben 55 und 56 sowie je einen Antriebsmotor, der ebenfalls nicht dargestellt ist, auf. Die Werkzeugträger 59, 60 sind in Längsführungen 61, 62 und Querführungen 63, 64 aufgenommen, geführt und gehalten. In Längsrichtung 65 werden die Werkzeugträger 59, 60 von den Gewindespindeln 66, 67 und den Antriebsmotoren 68, 69 , die mit den Gewindemuttern 98, 99 in Wirkverbindung stehen, bewegt.
In Querrichtung 70 werden die Werkzeugträger 59, 60 von den Gewindespindeln 71, 72 und den Antriebsmotoren 73, 74 , die mit den Gewindemuttern 100, 101 in Wirkverbindung stehen, bewegt. Auf jedem Werkzeugträger 59, 60 ist in gegenseitigem Abstand zueinander je mindestens ein Bearbeitungswerkzeug 75, 76 sowie eine Prüfeinrichtung 77, 78 angeordnet.

Für ein gesteuertes Bewegen und Positionieren der Bearbeitungswerkzeuge 75, 76 und der Prüfeinrichtungen 77, 78 sind in Längsrichtung 65 die Wegmeßmittel 79, 80 vorgesehen und in Querrichtung 70 die Wegmeßmittel 81, 82. Die Wegmeßmittel 79, 80, 81, 82 sind über die Leitungen 83, 84, 85, 86 mit einer Datenverarbeitungsanlage 87 verbunden, die mit der Maschinensteuerung 91 zusammenarbeitet.

Die Prüfeinrichtungen 77, 78 sind über die Leitungen 88, 89 ebenfalls mit der Datenverarbeitungsanlage 87 verbunden. Soll nun beispielsweise das Istprofil 1' des Rades 52 mit der Prüfeinrichtung 78 auf Risse untersucht werden, wird diese von der Maschinensteuerung 91, die mit der Datenverarbeitungsanalge 87 korrespondiert, gesteuert und mit dem Rad 52 in den vorgesehenen axialen Lagen 92, 93 nacheinander in Berührung gebracht. Diese axialen Lagen können im Prinzip willkürlich gewählt werden. Man wird sie so auswählen, daß alle zu erwartenden Risse auch erkannt werden können.

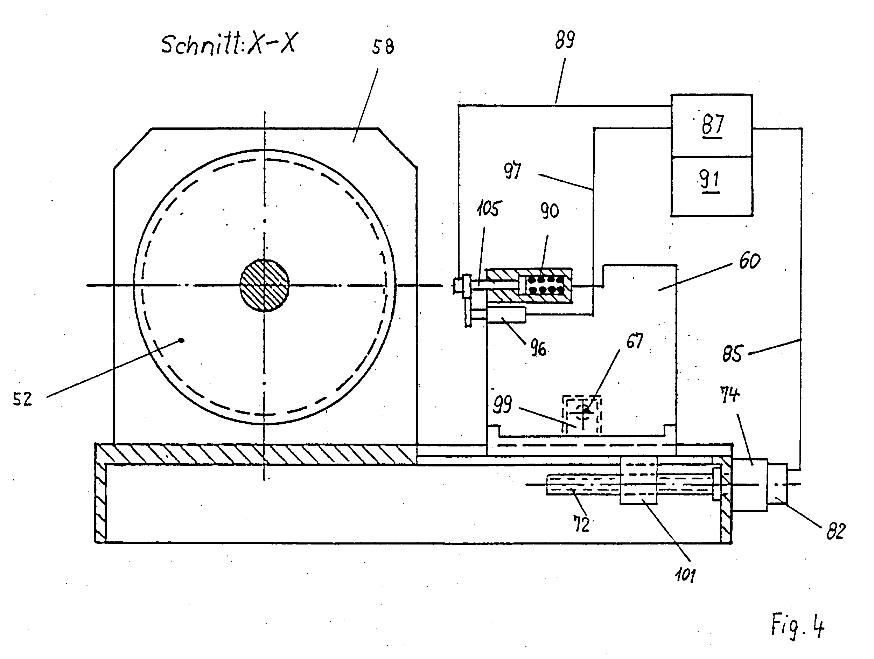

Ist nun im Bearbeitungsprogramm der Maschine vorgesehen, daß die Prüfeinrichtung 78 die Rißprüfung in der axialen Lage 92 beginnt, wird die Prüfeinrichtung 78 durch Verfahren des Werkzeugrägers 60 in Längsrichtung 65 in die axiale Lage 92 gebracht. Danach wird der Werkzeugräger 60 mit der Prüfeinrichtung 78 in der Querrichtung 70 in Richtung Rad 52 gefahren. Der Prüfkopf 94 erreicht dabei das im Maschinenprogramm vorgesehene Bezugsprofil 13 (s. auch Fig.1), das programmgemäß radial außerhalb des Rades 52 liegen soll. Eine gleiche Situation entsteht am Rad 51 mit Prüfkopf 94'.
Wenn die Kontaktfläche 95 des Prüfkopfes 94 (oder die Kontaktfläche 95' des Prüfkopfes 94') das Bezugsprofil 13 überquert, wird eine Abstandsmessung eingeleitet, die mit der Berührung des Istprofils 1 durch die Kontaktfläche 95 endet.
Mit der Berührung des Rades 52 am Istprofil durch die Kontaktfläche 95 wird die Querbewegung des Werkzeugträgers 60 noch nicht abgeschaltet. Der Werkzeugträger 60 fährt solange in Querrichtung 70 weiter, bis die vorgesehene Vorspannkraft einer Schraubenfeder 90 erreicht ist (Figur 4). Das Ende der Abstandsmessung kann durch einen Wegaufnehmer 96 (Fig. 4), der bei Berührung des Istprofils 1 durch die Kontaktfläche 95 betätigt wird, erfaßt werden. Über die Leitung 97 wird dann ein Signal an die Datenverarbeitungsanalge 87 gegeben und die Abstandmessung wird beendet. Der Punkt, an dem die vorgesehene Vorspannkraft erreicht ist, wird von dem Wegaufnehmer 96, der zur Vorspannkraft der Schraubenfeder 90 einen definierten Weg mißt, erfaßt. Ein weiteres Signal wird bei Erreichen des Vorspannweges, der die Vorspannkraft definiert, über Leitung 97 an die Datenverarbeitungsanlage 87 gegeben und die Querbewegung des Werkzeugträgers 60 wird abgeschaltet und die Rißprüfung in der Lage 92 wird eingeleitet. Bei der Rißprüfung rotiert das Rad 52, und die Umfangsfläche des Rades 52 wird in der Lage 92 in der Wirkbreite des Prüfkopfes 94 erfaßt und auf Risse geprüft. Erfaßte Risse werden mit ihren Rißtiefen gespeichert und für die Auswertung wird der Riß vorgesehen, der die größte Rißtiefe aufweist. Die Lage 93 wird in der gleichen Weise geprüft und die Auswertung der Prüfdaten erfolgt wie schon zu Figur 1 erläutert.

Mit dem in radialer Richtung beweglichen Prüfkopf 94 kann über dem Wegaufnehmer 96 auch eine Unrundheit des Rades bei der Rißprüfung gemessen und erfaßt werden. Es ist möglich, mit einer Umdrehung des zu prüfenden Eisenbahnrades den Betrag einer Unrundheit zu erfassen und zu speichern. Es ist weiter möglich, bei Überschreiten einer zulässigen Unrundheit die Lage der erfaßten Risse und ihre Tiefe in Abhängigkeit ihrer Position am unrunden Rad bei der Verlagerung des Sollprofils zu beachten.

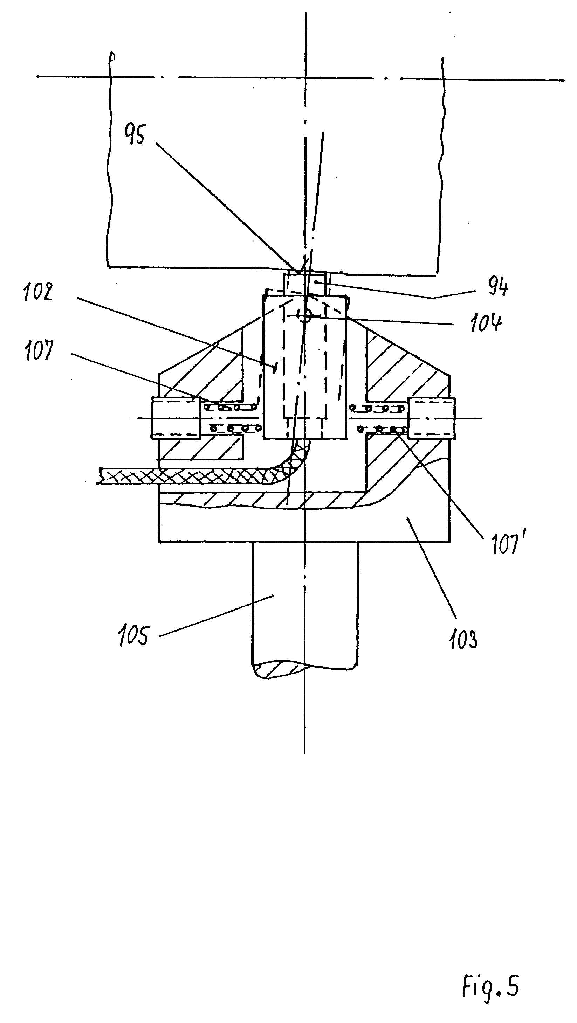

Figur 5 zeigt einen schwenkbar aufgenommenen Prüfkopf 94, der in einer Hülse 102 steckt, die wiederum in einem Halter 103 gehalten ist, der von dem Schaft 105 (Figur 4) getragen wird.
Die Hülse 102 ist schwenkbar um die Schwenkachse 104 in dem Halter 103 gehalten. Wird der Prüfkopf 94 vom zu prüfenden Rad an seiner Kontaktfläche 95 punktartig berührt, kann der Prüfkopf 94 unter der Berührung herumschwenken bis zur Linienanlage.
Damit der Prüfkopf 94 in seine Ausgangslage 106 zurückkehren kann, wenn die Prüffläche 95 kein Rad berührt, sind beidseitig gegenüberliegend je eine durch Schrauben 108, 108' krafteinstellbare Schraubenfeder 107, 107' vorgesehen, die am hinteren Ende der Hülse 102 angreifen.

### Liste der verwendeten Bezugszeichen

- 1, 1': Istprofil
- 2: Riß
- 3: Riß
- 4: Riß
- 5: Riß
- 6: Riß
- 7: Rißtiefe
- 8: Rißtiefe
- 9: Rißtiefe
- 10: Rißtiefe
- 11: Rißtiefe
- 12: Sollprofil
- 13: Bezugsprofil
- 14: Abstand
- 15: Abstand
- 16: Abstand
- 17: Abstand
- 18: Abstand
- 19: Rißgrund
- 20: Rißgrund
- 21: Rißgrund
- 22: Rißgrund
- 23: Rißgrund
- 24: Sollprofil
- 25: Istprofil
- 26: Riß
- 27: Riß
- 28: Rißtiefe
- 29: Rißtiefe
- 30: Radumfangsfläche
- 31: Drehwerkzeug
- 32: Lage
- 33: Lage
- 34: Meßkreisebene
- 35: Rißgrund
- 36: Rißgrund
- 37: Abstand
- 38: Radmitte
- 39: Rad
- 40: Betrag
- 41: Punkt
- 42: Sollprofil
- 43: Radsatz
- 44: Wellenschenkel
- 45: Wellenschenkel
- 46: Körnerspitze
- 47: Körnerspitze
- 48: Körnerbohrungen
- 49: Körnerbohrungen
- 50: Rotationsachse
- 51: Rad
- 52: Rad
- 53,53': Mitnehmer
- 54,54': Mitnehmer
- 55: Planscheibe
- 56: Planscheibe
- 57: Spindelstock
- 58: Spindelstock
- 59: Werkzeugträger
- 60: Werkzeugträger
- 61: Längsführungen
- 62: Längsführungen
- 63: Querführungen
- 64: Querführungen
- 65: Längsrichtung
- 66: Gewindespindel
- 67: Gewindespindel
- 68: Antriebsmotor
- 69: Antriebsmotor
- 70: Querrichtung
- 71: Gewindespindel
- 72: Gewindespindel
- 73: Antreibsmotoren
- 74: Antriebsmotoren
- 75: Bearbeitungswerkzeuge
- 76: Bearbeitungswerkzeuge
- 77: Prüfeinrichtung
- 78: Prüfeinrichtung
- 79: Wegmeßmittel
- 80: Wegmeßmittel
- 81: Wegmeßmittel
- 82: Wegmeßmittel
- 83: Leitung
- 84: Leitung
- 85: Leitung
- 86: Leitung
- 87: Datgenverarbeitungsanlage
- 88: Leitung
- 89: Leitung
- 90: Schraubenfeder
- 91: Maschinensteuerung
- 92: Lage
- 93: Lage
- 94,94': Prüfkopf
- 95,95': Kontaktfläche
- 96: Wegaufnehmer
- 97: Leitung
- 98: Gewindemutter
- 99: Gewindemutter
- 100: Gewindemutter
- 101: Gewindemutter
- 102: Hülse
- 103: Halter
- 104: Schwenkachse
- 105: Schaft
- 106: Ausganglage
- 107,107': Schraubenfeder
- 108,108': Schrauben

## Patentansprüche

1. Verfahren zum Profilieren oder Reprofilieren von Eisenbahnrädern durch zerspanende Bearbeitung, wobei zunächst der Radkranz auf Risse geprüft und nachfolgend unter Berücksichtigung der Rißtiefe profiliert oder reprofiliert wird, dadurch gekennzeichnet, daß die axiale Lage von Rissen (2,3,4,5,6) und der radiale Abstand (14,15,16,17,18) eines jeden Rißgrundes (19,20,21,22,23) von einem Bezugsprofil (13), das der Kontur des Sollprofils entspricht, ermittelt wird, worauf eine Sollprofilkontur radial so verschoben wird, daß sie den Rißgrund (19) tangiert, der bei Abfahren der verlagerten Sollprofilkontur (24) durch ein Reprofilierungswerkzeug ein rißfreies Profil ergibt, worauf das Rad mit mindestens der zur Erreichung der verlagerten Sollprofilkontur notwendigen Spantiefe profiliert oder reprofiliert wird.

2. Verfahren zum Profilieren oder Reprofilieren von Eisenbahnrädern durch zerspanende Bearbeitung, wobei zunächst der Radkranz auf Risse geprüft und nachfolgend unter Berücksichtigung der Rißtiefe profiliert oder reprofiliert wird, dadurch gekennzeichnet, daß die axiale Lage (32,33) von Rissen (26,27) und in jeder axialen Lage (32,33) die größte Rißtiefe (28,29) ermittelt wird, worauf ein Drehwerkzeug (31) in den genannten axialen Lagen (32,33) sowie in einer Meßkreisebene (34) bis zur Berührung mit der Umfangsfläche (30) des Rades (39) gefahren und diese Positionen des Drehwerkzeuges (31) erfaßt und gespeichert werden, worauf das Tiefenmaß (28, 29) des Rißgrundes (35,36), der am nächsten an der Radmitte (38) liegt, in radialerRichtung, korrigiert um den radialen Betrag (40) der Profilneigung zwischen Meßkreisebene (34) und der axialen Lage (32,33) des Rißgrundes (35,36), in die Meßkreisebene (34) projiziert und durch diesen Punkt oder radial tiefer ein zu profilierendes Profil (42) gelegt und profiliert oder reprofiliert wird.

3. Verfahren nach Anspruch 2, dadurch gekennzeichnet, daß in mindestens einer Lage (32,33,34) oder Ebene nach der Berührung mit der Umfangsfläche (30) das Drehwerkzeug radial bis zur Erzeugung einer geschlossenen Umfangsspur gefahren und erst diese Position des Drehwerkzeuges (31) erfaßt und gespeichert wird.

4. Verfahren nach einem der Ansprüche 1 bis 3, dadurch gekennzeichnet, daß jedes Rad in Abhängigkeit vom Ausgangszustand seines Profils profiliert oder reprofiliert und nachfolgend in der Bearbeitungsmaschine auf Risse, die bis zur Lauffläche reichen, geprüft wird, worauf dann, wenn Risse ermittelt werden, der Bearbeitungsvorgang und Prüfvorgang solange wiederholt wird, wie Risse ermittelt werden.

5. Verfahren nach einem der Ansprüche 1 bis 4, dadurch gekennzeichnet, daß eine mittels eines parallel und senkrecht zur Drehachse beweglichen Trägers (59,60) verfahrbare Prüfeinrichtung (77,78) zur Erfassung der Tiefe eines Rißes verwendet wird, wobei die Bewegungen des Trägers (59,60) über Wegmeßmittel (79,80) erfaßt und wobei deren Daten ebenso wie die Daten der Prüfeinrichtung an eine Datenverarbeitungsanlage (87) weitergegeben werden, die ihrerseits eine Maschinensteuerung (91) beeinflußt.

6. Verfahren nach Anspruch 5, dadurch gekennzeichnet, daß als Träger (59,60) für die Prüfeinrichtungen (72,78) der Werkzeugträger (59,60) verwendet wird.

7. Verfahren nach einem der Ansprüche 5 und 6, dadurch gekennzeichnet, daß zur Prüfung ein in der Prüfeinrichtung (77,78) gegen eine Vorspannkraft in mindestens radialer Richtung beweglicher Prüfkopf (94,94') verwendet wird.

8. Verfahren nach Anspruch 7, dadurch gekennzeichnet, daß eine Berührung einer Kontaktfläche (95) eines Prüfkopfes (94,94') mit der Umfangsfläche eines Rades erfaßt und an die Datenverarbeitungsanlage (87) weitergeleitet wird.

9. Verfahren nach Anspruch 8, dadurch gekennzeichnet, daß mindestens eine Radialbewegung des Trägers (59,60) eines Prüfkopfes (94,94') abgeschaltet wird nachdem dieser einen vorbestimmten Weg nach der Berührung der Kontaktfläche (95,95') des Prüfkopfes (94,94') mit der Umfangsfläche des Rades durchfahren hat.

10. Verfahren nach einem der Ansprüche 1 bis 9, dadurch gekennzeichnet, daß die Rißprüfung nach dem Gleichstrom-Potentialsondenverfahren durchgeführt wird.

11. Verfahren nach einem der Ansprüche 1 bis 9, dadurch gekennzeichnet, daß die Rißprüfung unter Verwendung eines Wirbelstrom-Tastspulengerät durchgeführt wird

12. Verfahren nach einem der Ansprüche 5 und 6, dadurch gekennzeichnet, daß für die Prüfung mindestens ein Prüfkopf (94,94') verwendet wird, der an seinem der Drehachse zugeordneten Ende bei einer Anlage an der Umfangsfläche des Rades um eine Schwenkachse (104) schwenkbar ist, die zur Drehachse und zur Mittelachse des Prüfkopfes (94,94') mindestens angenähert senkrecht verläuft, wobei der Prüfkopf nach der Prüfung abgehoben wird und in seine Ausgangslage zurückschwenkt.

## Claims

1. Process for the profiling or reprofiling of railroad wheels by a cutting machining method, in which the wheel rim is first examined for flaws and subsequently is profiled or reprofiled having regard to the depth of the flaws, characterised in that the axial position of flaws (2, 3, 4, 5, 6) and the radial distance (14, 15, 16, 17, 18) of the bottom (19, 20, 21, 22, 23) of each flaw from a reference profile (13), which corresponds to the contour of the desired profile, is determined, whereafter a desired profile contour is so displaced radially that it is tangential to the bottom (19) of that flaw which will result in a flaw-free profile upon traversing of the displaced desired profile contour (24) by a reprofiling tool, whereafter the wheel is profiled or reprofiled to at least the cutting depth necessary to achieve the displaced desired profile contour.

2. Process for the profiling or reprofiling of railroad wheels by a cutting machining method, wherein the wheel rim is first examined for flaws and subsequently is profiled or reprofiled having regard to the depth of the flaws, characterised in that the axial position (32, 33) of flaws (26, 27) and the maximum flaw depth (28, 29) in each axial position (32, 33) is determined, whereafter a rotary tool (31) is brought into contact with the peripheral surface (30) of the wheel (39) at the said axial positions (32, 33) as well as in a measuring circle plane (34) and these positions of the rotary tool (31) are determined and stored, whereafter the depth (28, 29) of the bottom (35, 36) of the flaw which lies closest to the wheel centre (38), in the radial direction, is corrected by the radial amount (40) of the profile slope between measuring circle plane (34) and the axial position (32, 33) of the bottom (35, 36) of the flaw, projected on the measuring circle plane (34), and the desired profile (42) is set to run through this point or radially deeper and is profiled or reprofiled.

3. Process according to claim 2, characterised in that in at least one position (32, 33, 34) or plane, after the contact with the peripheral surface (30), the rotary tool is traversed radially to produce a closed peripheral path and this position of the rotary tool (31) is first determined and stored.

4. Process according to one of claims 1 to 3, characterised in that each wheel is profiled or reprofiled in dependence upon the initial state of its profile and subsequently in the processing machine is examined for flaws which are apparent at the running surface, whereafter, if flaws are detected, the processing process and examination process are repeated so long as flaws are detected.

5. Process according to one of claims 1 to 4, characterised in that an examination device (77, 78) for determining the depth of a flaw is used which travels by means of a carrier (59, 60) movable parallel to and perpendicular to the axis of rotation, wherein the movements of the carrier (59, 60) are detected by means of displacement measuring means (79, 80) and wherein its data, like the data from the examination device, is fed to a data processing means (87) which influences a machine control (91).

6. Process according to claim 5, characterised in that the tool carrier (59, 60) is used as carrier (59, 60) for the examination device (72, 78).

7. Process according to one of claims 5 and 6, characterised in that an examination head (94, 94') movable in the examination device (77, 78) at least in the radial direction against a biassing force is used for the examination.

8. Process according to claim 7, characterised in that a contact between a contact surface (95) of an examination head (94, 94') and the circumferential surface of a wheel is detected and is transmitted to the data processing means (87).

9. Process according to claim 8, characterised in that at least a radial movement of the carrier (59, 60) of an examination head (94, 94') is discontinued after this has traversed a predetermined path after the contact of the contact surface (95, 95') of the examination head (94, 94') with the circumferential surface of the wheel.

10. Process according to one of claims 1 to 9, characterised in that the examination for flaws is carried out by the dc voltage sampling process.

11. Process according to one of claims 1 to 9, characterised in that the examination for flaws is carried out by the use of an eddy current coil testing device.

12. Process according to one of claims 5 and 6, characterised in that for the examination at least one examination head (94, 94') is used which is pivotable about a pivot axis (104) at its end associated with the axis of rotation into a position of contact with the circumferential surface of the wheel, wherein said pivot axis extends at least approximately perpendicular to the axis of rotation and to the central axis of the examination head (94, 94'), and wherein the examination head is raised after the examination and is pivoted back into its initial position.

## Revendications

1. Procédé pour profiler ou reprofiler des roues de chemin de fer par usinage avec enlèvement de copeaux, dans le cas duquel on contrôle d'abord la couronne de la roue en ce qui concerne les fissurations, et ensuite on procède au profilage ou au reprofilage en tenant compte de la profondeur des fissures, caractérisé en ce que la position axiale de fissurations (2, 3, 4, 5,6) et la distance radiale (14, 15, 16, 17, 18) de chacun des fonds des fissurations (19, 20, 21, 22, 23) sont déterminées par rapport à un profil de référence (13), correspondant au profil nominal théorique, après quoi un contour conforme au profil nominal théorique est décalé radialement, de façon à être tangent au fond (19) de la fissure qui, lors de l'enlèvement du contour du profil nominal théorique (24) au moyen d'un outil de reprofilage, donne un profil sans fissurations, après quoi la roue est profilée, ou reprofilée avec au moins la profondeur d'usinage nécessaire pour obtenir le contour du profil nominal théorique décalé.

2. Procédé pour profiler ou reprofiler des roues de chemin de fer par usinage avec enlèvement de copeaux, dans le cas duquel on contrôle d'abord la couronne de la roue en ce qui concerne les fissurations, et ensuite on procède au profilage ou au reprofilage en tenant compte de la profondeur des fissures, caractérisé en ce que la position axiale (32, 33) des fissures (26, 27) et, dans chaque position axiale (32, 33), la plus grande profondeur des fissures (28, 29) sont déterminées, après quoi on fait avancer un outil de tournage (31) dans lesdites positions axiales (32, 33) ainsi que dans un plan circulaire de mesure (34), jusqu'à toucher la surface périphérique (30) de la roue (39), et ces positions de l'outil de tournage (31) sont relevées et mises en mémoire, après quoi la mesure de profondeur (28, 29) du fond des fissures (35, 36) situé au plus près du centre (38) de la roue est corrigée radialement de la composante radiale (40) de l'inclinaison du profil entre le plan circulaire de mesure (34) et la position axiale (32, 33) du fond (35, 36) de fissure (35, 36) est projetée dans le plan circulaire de mesure (34) et on définit, d'après ce point, ou plus profondément dans la direction radiale, un profil (42) d'après lequel on effectuera le profilage, et on procède au profilage ou au reprofilage.

3. Procédé suivant la revendication 2, caractérisé en ce que, dans au moins l'une des positions (32, 33, 34) ou plans après le contact avec la surface périphérique (30), on fait avancer radialement l'outil de tournage jusqu'à réaliser une passe périphérique fermée, puis alors seulement cette position de l'outil de tournage (31) est relevée et mise en mémoire.

4. Procédé suivant l'une quelconque des revendications 1 à 3, caractérisé en ce que chaque roue est profilée, ou reprofilée en fonction de l'état initial de son profil, puis ensuite, dans la machine d'usinage, est contrôlée en ce qui concerne les fissures arrivant jusqu'à la surface de roulement, après quoi, si des fissurations ont été relevées, l'opération d'usinage et l'opération de contrôle sont répétées aussi longtemps que l'on constate des fissurations.

5. Procédé suivant l'une quelconque des revendications 1 à 4, caractérisé en ce qu'on utilise un dispositif de contrôle (77, 78), pouvant se déplacer au moyen d'un support (59, 60) mobile parallèlement et perpendiculairement à l'axe de rotation, destiné à déterminer la profondeur d'une fissuration, étant entendu que les mouvements du support (59, 60) sont relevés par des moyens de mesure de déplacement (79, 80), et que les valeurs relevées pour ce support, ainsi que celles relevees pour le dispositif de contrôle, sont transmises à une installation d'interprétation des données (87) qui, de son côté, agit sur une commande (91) de la machine.

6. Procédé suivant la revendication 5, caractérisé en ce que, comme support (59, 60) du dispositif de contrôle (72, 78), on utilise le porte-outil (59, 60).

7. Procédé suivant la revendication 5 ou la revendication 6, caractérisé en ce que, pour le contrôle, on utilise une tête de contrôle (94, 94'), mobile dans le dispositif de contrôle (72, 78), au moins dans la direction radiale, et soumise à une précontrainte s'opposant à son mouvement.

8. Procédé suivant la revendication 7, caractérisé en ce qu'on relève la position de contact entre une surface de contact (95) d'une tête de contrôle (94, 94') et la surface périphérique de la roue, et que cette donnée est transmise à une installation d'interprétation des données (87).

9. Procédé suivant la revendication 8, caractérisé en ce qu'au moins un mouvement radial du support (59, 60) d'une tête de contrôle (94, 94') est interrompu après que celle-ci ait parcouru une course prédéterminée d'après la position de contact de la surface de contact (95, 95') de la tête de contrôle (94, 94') avec la surface périphérique de la roue.

10. Procédé suivant l'une quelconque des revendications 1 à 9, caractérisé en ce que le contrôle des fissures est effectué d'après le procédé de la sonde de potentiel en courant continu.

11. Procédé suivant l'une quelconque des revendications 1 à 9. caractérisé en ce que le contrôle des fissures est effectue en utilisant un appareil à bobine détectant les courants de Foucault.

12. Procédé suivant la revendication 5 ou la revendication 6. caractérisé en ce que, pour le contrôle, on utilise au moins une tête de contrôle (94, 94') pouvant pivoter, à son extrémité côté axe de rotation, autour d'un axe de pivotement (104), lors d'un contact avec la surface périphérique de la roue, cet axe de pivotement étant dirigé, au moins approximativement, perpendiculairement à l'axe de rotation et à l'axe médian de la tête de contrôle (94, 94'), étant entendu qu'on relève la tête de contrôle après le contrôle et qu'on la fait pivoter en arrière, pour revenir à sa position initiale.
